# EUROPÄISCHE PATENTSCHRIFT

(11) **EP 0 953 417 B1**
(45) Veröffentlichungstag und Bekanntmachung des Hinweises auf die Patenterteilung: **29.10.2003**
(21) Anmeldenummer: 99107614.2
(22) Anmeldetag: 16.04.1999
(51) Int. Cl.: B29B 17/00, B29B 17/02, B04B 1/00, B04B 3/00, B03B 1/02, B04B 11/02, B04B 11/04, B01D 33/00

(54) **Verfahren zum Trennen der Bestandteile eines mindestens zwei Plastiksubstanzen enthaltenden Produktes**
Method for separating the components of a product consisting of at least two plastic materials
Procédé pour séparer les constituants d'un produit comportant au moins deux substances plastiques

(30) Priorität: 23.04.1998 DE 19818183
(43) Veröffentlichungstag der Anmeldung: 03.11.1999
(73) Patentinhaber: Delphi Technologies, Inc., Troy, MI 48007 (US)
(72) Erfinder: Diegmann, Wolfgang, 42113 Wuppertal (DE); Hoffmanns, Werner, 40764 Langenfeld (DE)
(74) Vertreter: Cohausz & Florack

(56) Entgegenhaltungen:
- EP-A- 0 557 895
- DE-A- 3 129 638
- DE-A- 4 020 347
- DE-A- 4 303 500
- US-A- 3 661 266
- US-A- 3 875 064
- US-A- 5 366 091
- US-A- 5 772 041
- PATENT ABSTRACTS OF JAPAN vol. 095, no. 001, 28. Februar 1995 (1995-02-28) & JP 06 278137 A (KATAYAMA KOGYO KK), 4. Oktober 1994 (1994-10-04)
- PATENT ABSTRACTS OF JAPAN vol. 096, no. 004, 30. April 1996 (1996-04-30) & JP 07 329060 A (TOSHIBA MACH CO LTD), 19. Dezember 1995 (1995-12-19)
- PATENT ABSTRACTS OF JAPAN vol. 097, no. 009, 30. September 1997 (1997-09-30) & JP 09 131730 A (TOSHIBA MACH CO LTD), 20. Mai 1997 (1997-05-20)

## Beschreibung

Die Erfindung betrifft ein Verfahren zum Trennen der Bestandteile eines mindestens zwei Plastiksubstanzen unterschiedlicher Erweichungstemperatur enthaltenden Produktes, insbesondere am Ende seiner Lebensdauer.

Eine Fülle von elektrotechnischen Produkten bestehen aus einer Kombination aus verschiedenen Plastiksubstanzen und/ oder aus Plastik- und Metallteilen. Beispiele hierfür sind Tastaturen, Mainframes oder Laufwerke. Am Ende der Produktlebensdauer findet in zunehmendem Maße ein Recycling der verwendeten Materialien statt. Eine solche Wiederverwertung führt insbesondere dann zu Problemen, wenn eine Vielzahl unterschiedlicher Kunststoffe verwendet wird, da es wünschenswert ist, am Ende des Recyclingprozesses getrennte Materialien vorliegen zu haben. Soweit das Recycling von Metall-Kunststoffprodukten betroffen ist, kommt es darauf an, daß ebenfalls eine weitgehend mögliche Materialtrennung erreicht wird.

Es ist aus der Praxis bekannt, die oben genannten Produkte dadurch zu recyceln, daß die Produkte geschreddert und anschließend unter Ausnutzung der unterschiedlichen Dichten der einzelnen Materialien getrennt werden. Hierbei kommt es jedoch häufig zu Verunreinigungen durch Metallstäube. Ein weiteres Problem bei dem bekannten Verfahren besteht darin, daß bei sehr geringen Dichteunterschieden, wie dies bei Kombinationen verschiedener Kunststoffe in der Regel der Fall ist, eine hinreichende Materialtrennung nicht erreicht wird.

Die DE 40 20 347 A1 betrifft ein Verfahren, mit dessen Hilfe verschiedene Materialien, die sich normalerweise nicht verbinden lassen, einer Verbindung zuzuführen sind. Es ist bekannt, eine Plastiksubstanz zu beheizen. Dabei wird die Plastiksubstanz auf eine Erweichungstemperatur aufgeheizt. Nachdem die Plastiksubstanz aufgeheizt worden ist, wird diese in einem Rotor zentrifugiert. Der Zentrifugalkörper wird soweit aufgeheizt, dass die thermoplastischen Grundstoffe bis zum körnigen Zustand geschmolzen werden. Der fertig geschmolzene thermoplastische Grundstoff wird mittels eines Gases aufgeschäumt, wobei das Material durch ein gasförmiges oder flüssiges Medium zusätzlich gestreckt wird und wobei sich verschiedene Plastiksubstanzen miteinander verbinden sollen.

Aus der DE 31 29 368 A1 ist ein Verfahren bekannt, mit dessen Hilfe eine Plastiksubstanz von einem Metall getrennt werden kann. Dieses Verfahren beinhaltet den ersten Verfahrensschritt, die ummantelten Elektrokabel bis zu einer Erweichungstemperatur der Kunststoffisolierung aufzuheizen. Danach wird das aufgeweichte Kunststoffmaterial in einer Schleuder zentrifugiert. Durch das Zentrifugieren wird die Kunststoffisolierung vom Elektrokabel gelöst. Beide Materialien lassen sich getrennt voneinander weiterverarbeiten.

Aus Patent Abstracts of Japan JP 06278137 A ist eine Vorrichtung zum Trennen eines Produktes, welches einen Harzbestandteil und einen metallischen Bestandteil aufweist, bekannt. Dazu wird das Kompositprodukt in Stücke geschnitten und die Stücke in den Rotor einer Zentrifuge eingebracht. Dort wird das Produkt aufgeheizt oder unter einem geeigneten Druckzustand aufgeheizt. Das Harzmaterial wird im geschmolzenen Zustand vom hitzebeständigen Metallmaterial durch Zentrifugalkraft getrennt.

Die DE 44 14 750 betrifft ein Verfahren oder eine Vorrichtung zum Reinigen von mit Papier verunreinigter viskoser Kunststoffschmelze. Es geht hier darum, Verunreinigungen aus der Kunststoffschmelze, beispielsweise in Form von Sand, Papier oder Erde zu entfernen.

Die DE 43 08 685 betrifft eine Vorrichtung zum Trennen von Materialien unterschiedlicher Konsistenz, beispielsweise zum Trennen von Thermoplastkunststoff-Feststoff-Gemischen oder Gemischen aus unterschiedlich schmelzbaren Kunststoffen. Die hieraus bekannte Vorrichtung arbeitet mit einem entsprechend gestalteten Filterkopf, wobei das zu reinigende Kunststoffmaterial in plastifizierter Form unter Druck in einen zwischen einer Schaberwelle und einem Filterkörper verbleibenden Ringraum kontinuierlich eingeführt wird.

Davon ausgehend liegt der Erfindung die Aufgabe zugrunde, ein Verfahren der eingangs genannten Art dahingehend weiterzuentwickeln, daß eine verbesserte Materialtrennung erreicht wird.

Die Aufgabe der Erfindung wird dadurch gelöst, dass das Produkt mindestens auf die der Erweichungstemperatur der Plastiksubstanz mit der niedrigsten Erweichungstemperatur entsprechende Temperatur aufgeheizt und bei dieser Temperatur in dem Rotor einer Zentrifuge zentrifugiert wird, und daß anschließend das Produkt auf die Erweichungstemperatur der Plastiksubstanz mit der nächsthöheren Erweichungstemperatur entsprechenden Temperatur aufgeheizt und bei dieser Temperatur zentrifugiert wird.

Der Wiederaufbereitungsprozeß wird dabei schrittweise durchgeführt, so daß zunächst das Material mit der niedrigsten Erweichungstemperatur herauszentrifugiert wird und anschließend sukzessive zu Plastiksubstanzen höherer Erweichungstemperaturen übergegangen wird, bis auf diese Weise alle Plastiksubstanzen einzeln separiert sind. Dabei kann das Aufheizen des Produkts auf die niedrigste Erweichungstemperatur sowohl innerhalb als auch außerhalb des Rotors der Zentrifuge erfolgen.

Die Erfindung zeichnet sich dadurch aus, daß durch die Kombination aus thermischer und mechanischer Beaufschlagung durch die Zentrifugierbehandlung der Trennvorgang selektiv für jede der unterschiedlichen Plastiksubstanzen durchgeführt werden kann. Da die verwendeten Plastiksubstanzen hinreichend unterschiedliche Erweichungs- bzw. Schmelztemperaturen haben, ist die Materialselektivität gewährleistet.

Der besondere Vorteil des erfindungsgemäßen Verfahrens liegt darin, daß eine hohe Kostenersparnis erreicht werden kann, da der aus dem Stand der Technik bekannte Schreddervorgang für die Materialaufbereitung entfällt.

Es können nach dem erfindungsgemäßen Prinzip praktisch eine beliebige Anzahl von Plastiksubstanzen mit unterschiedlichen Erweichungs- bzw. Schmelztemperaturen voneinander separiert werden.

Die Erfindung eignet sich insbesondere für thermoplastische Materialien, insbesondere thermoplastische Polymere mit unterschiedlichen Schmelzpunkten.

In einer ersten Variante ist ein den Außenumfang des Rotors mindestens teilweise umschlingendes Band vorgesehen, durch dessen Innenseite der zentrifugierte Bestandteil aufgenommen wird. Nach dem Zentrifugieren des Bestandteils mit der niedrigsten Erweichungstemperatur wird das bevorzugt als Endlosband ausgebildete Band um eine bestimmte Bandlänge aus dem Bereich des Rotorumfangs heraustransportiert, so daß das zentrifugierte Material getrennt entsorgbar ist. Auf den im Bereich des Rotorumfangs angeordneten Bandabschnitt wird dann das Material mit der nächsthöheren Erweichungstemperatur herauszentrifugiert. Dadurch lassen sich die Schritte Zentrifugieren, Reinigen, Kühlen des Bandes in verfahrenstechnisch einfacher Weise realisieren.

Die Erfindung wird im folgenden anhand einer Zeichnung näher erläutert. Dabei zeigen:
- Fig. 1: ein erstes Ausführungsbeispiel der Erfindung und
- Fig. 2: ein zweites Ausführungsbeispiel der Erfindung.

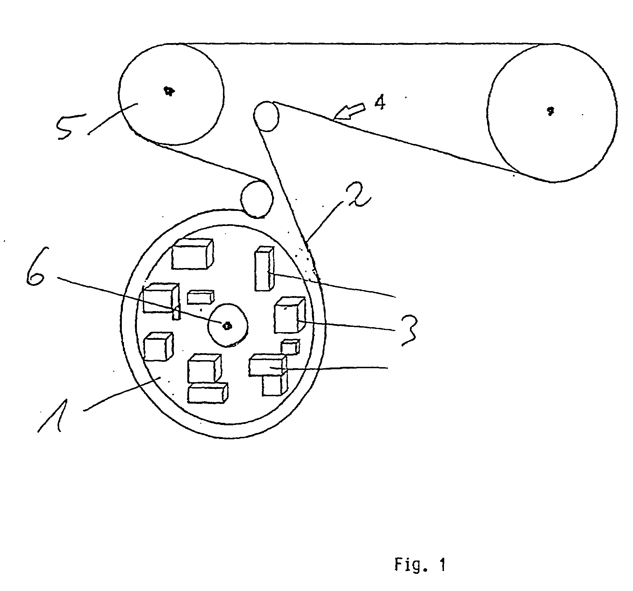

Figur 1 zeigt eine Prinzipdarstellung, in der mit dem Bezugszeichen 1 allgemein der Rotor einer Zentrifuge im Schnitt dargestellt ist, innerhalb dessen Mantelfläche zu recycelnde Produkte 3 aufgenommen sind. Hierbei kann es sich entweder um Produkte handeln, die aus mehreren Plastiksubstanzen bestehen oder aber um Plastik-/Metallkombinationsprodukte.

Innerhalb des Rotors 1 ist eine Beheizung 6 vorgesehen, die entweder als Gasbeheizung oder Strahlungsbeheizung ausgelegt ist.

Entlang des größten Teils des Umfangs des Rotors 1 ist mit Abstand ein Band 2 geführt, welches über Umlenkrollen 5 als Endlosband gehalten wird. Auslaufseitig des Rotorumfangabschnittes wird das Band 2 entlang einer Reinigungsstrecke 4 geführt, die aus einem auf die Oberfläche des Bandes gerichteten Reinigungselement besteht. Im Bereich der Umlenkrollen 5 ist das Band 2 zudem über eine Kühlstrecke geführt.

Die Vorrichtung arbeitet wie folgt:

Nach dem Befüllen des Rotors 1 mit den Produkten wird der Rotor zunächst über die Heizung 6 auf eine Temperatur erhitzt, die der Erweichungs- bzw. Schmelztemperatur des Plastikmaterials mit niedriger Erweichungs- bzw. Schmelztemperatur entspricht. Sobald diese Temperatur erreicht wird, d.h. sobald dieses Plastikmaterial zu erweichen bzw. zu schmelzen beginnt, werden die zugehörigen Bestandteile aufgrund der Zentrifugalkraft auf den Außenumfang des Rotors und von dort auf die Innenseite des Metallbandes 2 geschleudert, da der durch ein Netz, Gitter o.ä. begrenzte Außenumfang des Rotors für das verflüssigte Plastikmaterial durchlässig ist.

Nachdem alle Produktbestandteile dieses Materials herausgeschleudert worden sind, wird das Band 2 bewegt, und zwar so, daß das auf der Bandinnenseite befindliche Material in den Bereich der Reinigungsstation 4 gelangt und von dort in einen zu diesem Material gehörigen Entsorgungsbehälter geführt wird.

Anschließend wird im Bereich der Kühlstrecke 5 das Band auf eine Temperatur unterhalb der Schmelztemperatur des Plastikmaterials abgekühlt.

Daran anschließend wird die Temperatur des Rotors 1 weiter erhöht, bis die Erweichungs- bzw. Schmelztemperatur des Plastikmaterials mit der nächsthöheren Schmelztemperatur erreicht wird und der Vorgang erfolgt wie oben beschrieben für dieses Material.

Auf diese Weise können schrittweise sämtliche vorliegenden Plastiksubstanzen getrennt und anschließend getrennt entsorgt werden.

Eventuell im Rotor verbleibende Metallbestandteile können aus dem Rotorinneren entfernt und in einem getrennten Aufbereitungsprozeß recycelt werden.

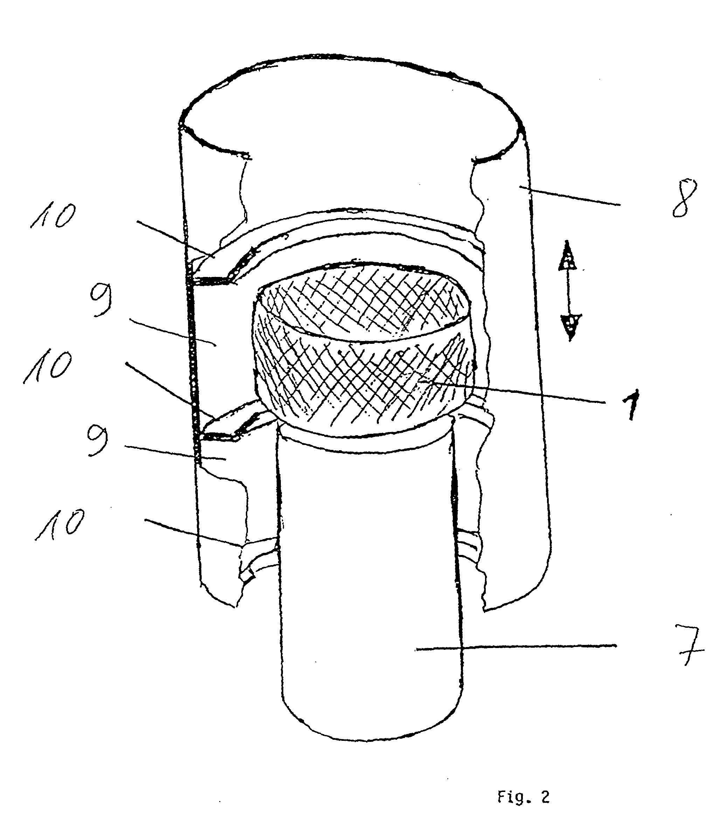

Fig. 2 zeigt ein zweites Ausführungsbeispiel der Erfindung. Mit dem Bezugszeichen 1 ist wiederum der Rotor einer Zentrifuge bezeichnet, welcher von einem Antrieb 7 auf die erforderliche Drehzahl gebracht wird. Innerhalb des Rotors 1 befinden sich wiederum die zu recycelnden Produkte. Der Außenumfang des Rotors 1 ist durch ein Netz, Gitter o.ä. gebildet, welches für verflüssigtes Plastikmaterial durchlässig ist.

Um den Außenumfang des Rotors 1 herum angeordnet ist eine Aufnahmevorrichtung 8 in Form eines in Pfeilrichtung axial zur Rotorachse verschiebbaren Behälters vorgesehen. Der Behälter ist in Längsrichtung in Fächer 9 aufgeteilt, die durch Begrenzungen 10 voneinander getrennt sind. Jedes der Fächer 9 dient zur Aufnahme einer der getrennten Plastiksubstanzen.

Der Behälter 8 wird bei jeder neuen Temperaturstufe axial derart verschoben, daß jeweils ein Aufnahmefach 9 für den bei der bestimmten Temperatur schmelzenden und herauszentrifugierten Plastikbestandteil (Polymeranteil) dient.

Der Behälter 8 ist austauschbar derart, daß bei jeder neuen Beladung des Zentrifugenrotors mit zu recycelnden Produkten ein neuer Behälter eingesetzt wird und der zuvor benutzte einer Entladevorrichtung (nicht dargestellt) zugeführt wird, mittels der die jeweils ausgeschleuderten Komponenten aus den einzelnen Fächern 9 separat entfernt werden.

### Bezugszeichenliste:

- 1 -: Zentrifuge
- 2 -: Band
- 3 -: Produkt
- 4 -: Reinigungsabschnitt
- 5 -: Bandumlenkrollen
- 6 -: Heizvorrichtung
- 7 -: Rotorantrieb
- 8 -: Aufnahmebehälter
- 9 -: Aufnahmefach
- 10 -: Begrenzung

## Patentansprüche

1. Verfahren zum Trennen der Bestandteile eines mindestens zwei Plastiksubstanzen enthaltenden Produktes,
**dadurch gekennzeichnet, daß**
das Produkt mindestens auf die der Erweichungstemperatur der Plastiksubstanz mit der niedrigsten Erweichungstemperatur entsprechende Temperatur aufgeheizt und bei dieser Temperatur in dem Rotor einer Zentrifuge zentrifugiert wird, und daß anschließend das Produkt auf die Erweichungstemperatur der Plastiksubstanz mit der nächsthöheren Erweichungstemperatur entsprechenden Temperatur aufgeheizt und bei dieser Temperatur zentrifugiert wird.

2. Verfahren nach Anspruch 1,
**dadurch gekennzeichnet, daß** das Produkt innerhalb des beheizbaren Rotors der Zentrifuge auf die niedrigste Erweichungstemperatur aufgeheizt wird.

3. Verfahren nach Anspruch 1,
**dadurch gekennzeichnet, daß** das Produkt außerhalb des Rotors der Zentrifuge auf die niedrigste Erweichungstemperatur aufgeheizt wird.

4. Verfahren nach Anspruch 2,
**dadurch gekennzeichnet, daß** das Produkt sukzessive zu Erweichungstemperaturen von Plastiksubstanzen höherer Erweichungstemperatur aufgeheizt und bei dieser Temperatur zentrifugiert wird.

5. Verfahren nach einem der Ansprüche 1 bis 3,
**dadurch gekennzeichnet, daß** die Plastiksubstanz ein Thermoplast ist.

6. Verfahren nach Anspruch 5,
**dadurch gekennzeichnet, daß** die Plastiksubstanz ein thermoplastischer Polymer ist.

7. Verfahren nach einem der Ansprüche 1 bis 6, **dadurch gekennzeichnet, dass** die zentrifugierte Plastiksubstanz mit Hilfe eines den Rotor umschlingenden Bandes aufgenommen und vom Rotor weg transportiert wird.

8. Verfahren nach einem der Ansprüche 1 bis 7, **dadurch gekennzeichnet, dass** die zentrifugierte Plastiksubstanz gekühlt wird.

9. Verwendung eines Verfahrens nach einem der vorhergehenden Ansprüche zur Trennung von Produkten, die mindestens zwei unterschiedliche thermoplastische Polymere enthalten.

## Claims

1. A method for separating the components of a product containing at least two plastic substances,
**characterized in that**,
the product is heated at least to a temperature corresponding to the refractory deformation temperature of the plastic substance with the lowest refractory deformation temperature and at this temperature, is centrifuged in the rotor of a centrifuge, and that next, the product is heated to the temperature corresponding to the refractory deformation temperature of the plastic substance with the next higher refractory deformation temperature and is centrifuged at this temperature.

2. The method according to claim 1, **characterized in that** the product is heated within the heatable rotor of the centrifuge to the lowest refractory deformation temperature.

3. The method according to claim 1, **characterized in that** the product is heated outside of the rotor of the centrifuge to the lowest refractory deformation temperature.

4. The method according to claim 2, **characterized in that** the product is heated successively to a higher refractory deformation temperature than refractory deformation temperatures of plastic substances and is centrifuged at this temperature.

5. The method according to one of claims 1 through 3, **characterized in that** the plastic substance is a thermoplast.

6. The method according to claim 5, **characterized in that** the plastic substance is a thermoplastic polymer.

7. The method according to one of claims 1 through 6, **characterized in that** the centrifuged plastic substance is looped up with the assistance of a band entangling the rotor and is transported away from the rotor.

8. The method according to one of claims 1 through 7, **characterized in that** the centrifuged plastic substance is cooled.

9. Use of a method according to one of the preceding claims for separating products, which contain at least two different thermoplastic polymers.

## Revendications

1. Procédé pour séparer les constituants d'un produit contenant au moins deux substances plastiques, **caractérisé en ce**
**qu'**on chauffe le produit au moins à la température qui correspond à la température de ramollissement de la substance plastique possédant la température de ramollissement la plus faible, et à cette température, on centrifuge le produit dans le rotor d'une centrifugeuse, et qu'ensuite on chauffe le produit à la température de ramollissement de la substance plastique possédant la température correspondant à la température de ramollissement immédiatement supérieure, et on centrifuge le produit à cette température.

2. Procédé selon la revendication 1, **caractérisé en ce qu'**on chauffe le produit à la température de ramollissement la plus faible à l'intérieur du rotor pouvant être chauffé de la centrifugeuse.

3. Procédé selon la revendication 1, **caractérisé en ce qu'**on chauffe le produit à la température de ramollissement la plus faible à l'extérieur du rotor de la centrifugeuse.

4. Procédé selon la revendication 2, **caractérisé en ce qu'**on chauffe le produit successivement à des températures de ramollissement de substances plastiques ayant une température de ramollissement plus élevée, et on centrifuge le produit à cette température.

5. Procédé selon l'une des revendications 1 à 3, **caractérisé en ce que** la substance plastique est une matière thermoplastique.

6. Procédé selon la revendication 5, **caractérisé en ce que** la substance plastique est un polymère thermoplastique.

7. Procédé selon l'une des revendications 1 à 6, **caractérisé en ce que** la substance plastique centrifugée est reçue et est évacuée du rotor au moyen d'une bande circulant autour du rotor.

8. Procédé selon l'une des revendications 1 à 7, **caractérisé en ce qu'**on refroidit la substance plastique centrifugée.

9. Utilisation d'un procédé selon l'une des revendications précédentes, pour séparer des produits, qui contiennent au moins deux polymères thermoplastiques différents.
